# EUROPÄISCHE PATENTSCHRIFT

(11) **EP 2 027 931 B1**
(45) Veröffentlichungstag und Bekanntmachung des Hinweises auf die Patenterteilung: **26.02.2014**
(21) Anmeldenummer: 08161273.1
(22) Anmeldetag: 28.07.2008
(51) Int. Cl.: B05B 7/24, F16L 37/252

(54) **Anschlussteil zur Verbindung einer Materialzuführungseinrichtung an eine Spritzpistole**
Connector for joining a material supply device to an injection pistol
Pièce de raccordement destinée au raccordement d'un dispositif d'introduction de matériel sur un pistolet pulvérisateur

(30) Priorität: 18.08.2007 DE 202007011604 U
(43) Veröffentlichungstag der Anmeldung: 25.02.2009
(60) Teilanmeldung: 13196591.5
(73) Patentinhaber: SATA GmbH & Co. KG, 70806 Kornwestheim (DE)
(72) Erfinder: Schmon, Dr., Ewald, 72661, Grafenberg (DE)
(74) Vertreter: Charrier, Rapp & Liebau

(56) Entgegenhaltungen:
- WO-A-03/069208
- WO-A-2004/037433
- WO-A-2005/070558
- DE-A1-102004 003 438
- DE-A1-102004 007 733
- DE-U1- 20 202 123
- DE-U1- 20 321 212
- DE-U1-202004 003 116
- FR-A- 789 762
- FR-A- 2 462 200

## Beschreibung

Die Erfindung betrifft eine Farbspritzeinrichtung nach dem Oberbegriff des Anspruchs 1.

Aus der DE 10 2004 003 438 A1 ist ein als Spritzgussteil aus Kunststoff hergestellter Fließbecher für eine Farbspritzpistole bekannt, der einen becherförmigen Behälter und einen auf den Behälter aufsetzbaren Deckel umfasst. An dem Deckel ist zur unmittelbaren Befestigung des Fließbechers an einer Farbspritzpistole ein Anschlussteil angeformt, welches einen hohlzylindrischen Anschlussstutzen mit einem am Außenumfang dieses Anschlussstutzens umlaufendes Schraubkeilelement aufweist. Das Schraubkeilelement dient zur Herstellung einer Schraubkeilverbindung mit einem Gegenelement am Pistolenkörper der Farbspritzpistole. Durch Zusammenwirken des Schraubkeilelements mit dem Gegenelement am Spritzpistolenkörper kann der Fließbecher schnell und einfach mit der Spritzpistole verbunden und wieder von dieser gelöst werden. Damit beim Aufsetzen des Fließbechers auf die Farbspritzpistole die Schraubkeilverbindung nicht überdreht werden kann, ist am Ende des Schraubkeilelements ein Anschlagelement vorgesehen, welches beim Herstellen der Schraubkeilverbindung zwischen dem Fließbecher und der Farbspritzpistole einen Endanschlag bildet.

Da das Anschlussteil, wie der Deckel des Fließbechers, aus Kunststoff gefertigt ist und das Gegenelement am Spritzpistolenkörper aus Metall gefertigt ist, besteht bei dem bekannten Anschlussteil das Problem, dass sich - bedingt durch Fertigungstoleranzen -beim Herstellen der Schraubkeilverbindung das härtere Gegenelement in den demgegenüber weicheren Anschlussstutzen aus Kunststoff und insbesondere in das Schraubkeilelement eingräbt. Beim Lösen der Schraubkeilverbindung durch Zurückdrehen des Deckels vom Gegenelement kann ferner durch die Federelastizität des Kunststoffes ein Kunststoffspan an der Oberseite des Schraubkeilelements abgeschält werden. Dadurch wird zum einen das Schraubkeilelement beschädigt und bei jedem Aufsetzen des Fließbechers auf die Spritzpistole weiter abgetragen, was zu einem weniger festen Sitz des Fließbecherdeckels auf dem Spritzpistolenkörper führt. Zum anderen entstehen durch das Abtragen von Kunststoffmaterial am Anschlussstutzen aufgrund des Einschneidens des metallischen Gegenelements in das weiche Kunststoffmaterial Kunststoffspäne, welche beim Lackieren äußerst störend und unerwünscht sind, weil sie beispielsweise die zu lackierende Oberfläche verschmutzen oder die lackierte Oberfläche beschädigen können.

Hiervon ausgehend liegt der Erfindung die Aufgabe zugrunde, ein gattungemäßes Anschlussteil so zu verbessern, dass die erwähnten Nachteile nicht mehr auftreten können. Gelöst wird diese Aufgabe mit einer Farbspritzeinrichtung mit den Merkmalen des Anspruchs 1. Bevorzugte Ausgestaltungen und Anwendungen der Farbspritzeinrichtung sind den Unteransprüchen zu entnehmen.

Nachfolgend wird die Erfindung anhand eines Ausführungsbeispiels unter Bezugnahme auf die begleitenden Zeichnungen näher erläutert. Die Zeichnungen zeigen:
- **Figur 1a:**: Seitenansicht eines Farbbehälters für eine Farbspritzpistole, umfassend einen Farbbecher und einen darauf aufsetzbaren Deckel, der über ein Anschlussstück verfügt;
- **Figur 1b:**: Darstellung des Farbbehälters von Figur 1a im Schnitt;
- **Figur 1c:**: Schnittdarstellung des Anschlussteils des Farbbehälters von Figur 1a entlang der Linie B-B;
- **Figur 1d:**: Detailansicht des Anschlussstücks des Farbbehälters von Figur 1b im Querschnitt;
- **Figur 2a:**: Seitenansicht einer Farbspritzpistole und einem darauf aufgesetzten Farbbehälter gemäß dem Ausführungsbeispiel von Figur 1;
- **Figur 2b:**: Detaildarstellung der Verbindung zwischen dem Farbbehälter und der Farbspritzpistole von Figur 1a in einer Schnittdarstellung.
- **Figur 3a:**: Seitenansicht eines Fließbechers für eine Spritzpistole mit einem angeformten Anschlussstück in einer alternativen Ausführungsform und einer Querschnittsansicht im Bereich des Anschlussstücks (oben);
- **Figur 3b:**: Detailansicht des Anschlussstück des Fließbechers von Figur 3a;
- **Figur 4a:**: Seitenansicht eines Fließbechers für eine Spritzpistole mit einem angeformten Anschlussstück in einer weiteren alternativen Ausführungsform und einer Querschnittsansicht im Bereich des Anschlussstücks (oben);
- **Figur 4b:**: Detailansicht des Anschlussstück des Fließbechers von Figur 4a;

Das Anschlussteil dient zur Verbindung einer Materialzuführungseinrichtung an eine Spritzpistole. Bei dem nachfolgend beschriebenen Ausführungsbeispiel handelt es sich bei der Materialzuführungseinrichtung um einen Farbbehälter für eine Fließbecher-Farbspritzpistole. Das Anschlussteil kann jedoch auch an anderen Materialzuführungseinrichtungen und für andere Arten von Spritzpistolen verwendet werden. Es kann beispielsweise auch am Ende eines Materialzuführungsschlauchs angeordnet sein, der über das Anschlussteil an eine Spritzpistole angeflanscht werden kann.

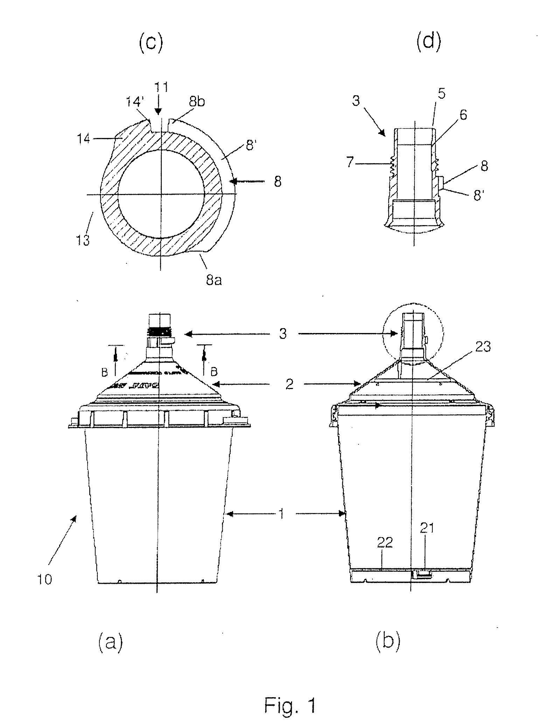

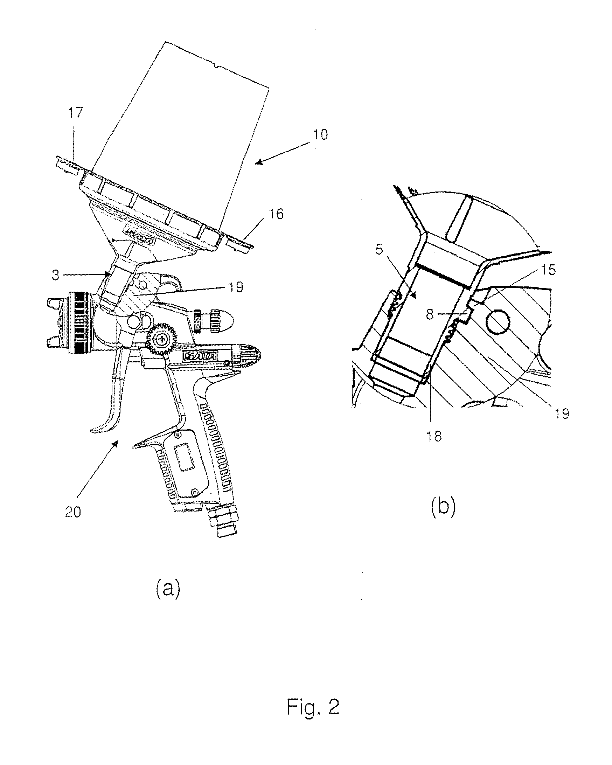

Der in Figur 1a in einer Seitenansicht dargestellte Fließbecher, der eine Materialzuführungseinrichtung 10 darstellt, enthält einen becherförmigen Behälter 1 und einen auf diesen aufsetzbaren Deckel 2, an dem ein Anschlussteil 3 zur lösbaren Befestigung des Fließbechers an einer Spritzpistole 20 angeformt ist. In Figur 2a ist eine Spritzpistole 20 mit einer darauf aufgesetzten Materialzuführungseinrichtung 10, nämlich dem in Figur 1a gezeigten Fließbecher, dargestellt. Sowohl der Behälter 1 als auch der Deckel 2 sind zweckmäßigerweise als Spritzgussteile aus Kunststoff hergestellt und das Anschlussteil 3, welches einen hohlzylindrischen Anschlussstutzen 5 umfasst, ist bevorzugt einstückig am Deckel 2 angeformt. Zum Befüllen mit einer zu verspritzenden Flüssigkeit wird der Deckel 2 vom Behälter 1 abgenommen und nach dem Befüllen wird der Deckel auf den Behälter 1 flüssigkeitsdicht aufgeschraubt. Anschließend kann der hohlzylindrischen Anschlussstutzen 5 des Anschlussteils 3 in die Anschlussbohrung 18 einer auf den Kopf gestellten Spritzpistole 20 flüssigkeitsdicht eingesetzt werden. Zum Verspritzen der in den Fließbecher eingefüllten Flüssigkeit wird dann die Spritzpistole 20 umgedreht, so dass sich der Fließbecher an der Oberseite der Farbspritzpistole befindet. In dieser Stellung kann die zu verspritzende Flüssigkeit aus dem Fließbecher durch den hohlzylindrischen Anschlussstutzen 5 in die Anschlussbohrung und den Spritzkanal der Spritzpistole 20 fließen.

Um eine Entlüftung des Fließbechers zu gewährleisten, ist im Boden 22 ein Belüftungsventil 21 vorgesehen. Das Belüftungsventil 21 ist nach dem Spritzvorgang wieder verschließbar, wodurch gewährleistet wird, dass der Fließbecher nach Beendigung des Spritzvorgangs von der Spritzpistole 20 abgenommen und zur Aufbewahrung der noch nicht verspritzen Flüssigkeit verwendet werden kann. Im Deckel 2 ist ein Sieb 23 vorgesehen, um die vom Fließbecher in die Spritzpistole fließende Flüssigkeit zu filtern.

Das in den Figuren 1c und 1d jeweils im Schnitt und vergrößert dargestellte Anschlussteil 3 besteht aus einem an dem Deckel 2 angespritzten oder anderweitig angeformten, hohlzylindrischen Anschlussstutzen 5. Der Anschlussstutzen 5 weist an seiner Außenseite einen vorderen zylindrischen Führungsbereich 6 und ein daran anschließendes Außengewinde 7 auf. Der Führungsbereich 6 dient zum zentrischen Einführen des Anschlussstutzens 5 in die in den Figuren 2a und 2b in der Schnittansicht gezeigten Anschlussbohrung 18 im Spritzpistolenkörper 19. Das Außengewinde 7 ist vorgesehen, damit das Anschlussteil 3 auch in ein konventionelles Innengewinde in der Bohrung 18 im Spritzpistolenkörper 19 einer Spritzpistole 20 eingeschraubt werden kann. Am Außenumfang des Anschlussstutzens 5 ist weiterhin ein an das Außengewinde 7 anschließendes und am Außenumfang des Anschlussstutzens 5 umlaufendes Schraubkeilelement 8 angeformt. Das Schraubkeilelement 8 hat die Form eines nur teilweise am Außenumfang des Anschlussstutzens 5 umlaufenden Außengewindegangs und weist bevorzugt ein Dreiecks- oder Trapezprofil auf. Bevorzugt verläuft das Schraubkeilelement 8 über weniger als die Hälfte des Umfangs des Anschlussstutzens 5. Das Schraubkeilelement 8 weist einen unteren Anfang 8a und ein oberes Ende 8b auf (Figur 1c). Die in der Darstellung der Figur 1c und 1d gezeigte Unterseite des Schraubkeilelements 8 bildet eine Wirkfläche 8'. Das Schraubkeilelement 8 dient zur Herstellung einer Schraubkeilverbindung zwischen dem Anschlussteil 3 und dem Pistolenkörper 19 der Spritzpistole 20.

Zur Herstellung der Schraubkeilverbindung ist am Pistolenkörper 19 der Spritzpistole 20 ein Gegenelement 15 angeformt, welches bei dem in Figur 2 gezeigten Ausführungsbeispiel der Spritzpistole 20 durch einen einseitigen Ansatz oberhalb der Aufnahmebohrung 18 des Pistolenkörpers 19 gebildet ist. Bei dem Ansatz, der das Gegenelement 15 bildet, handelt es sich bevorzugt um einen keilförmigen Ansatz, dessen Dicke vom einen Ende zum anderen Ende kontinuierlich ansteigend zunehmen kann, der wie der Spritzpistolenkörper 19 aus Metall ist. Zum Herstellen der Schraubkeilverbindung wird die Wirkfläche 8' des Schraubkeilelements 8 in Eingriff mit dem Gegenelement 15 am Spritzpistolenkörper gebracht.

Wie sich aus der Schnittdarstellung der Figur 1c ergibt, ist in Umfangsrichtung im Abstand zum oberen Ende 8b des Schraubkeilelements 8 ein Anschlagelement 14 am Außenumfang des Anschlussstutzens 5 angeformt. Das Anschlagelement 14 weist eine dem oberen Ende 8b des Schraubkeilelements 8 gegenüberliegende Anschlagfläche 14' auf. Zwischen der Anschlagfläche 14' und dem oberen Ende 8b des Schraubkeilelements 8 ist demzufolge in Umfangsrichtung eine Lücke 11 gebildet. Das Anschlagelement 14 bildet damit ein vom Außenumfang des Anschlussstutzens 5 vorstehendes Widerlager, welches beim Eindrehen der Schraubkeilverbindung eine Drehbegrenzung des Anschlussteils 3 (und damit des Deckels 2) gegenüber dem Spritzpistolenkörper 19 bewirkt. Der Ansatz am Spritzpistolenkörper 19 kann jedoch auch ohne keilförmige Steigung versehen sein. Als alternative Ausführungsform, die hier zeichnerisch nicht dargestellt ist, kommt auch eine Ausführung in Betracht, bei der das Gegenelement 15 am Spritzpistolenkörper als keilförmiges Schraubkeilelement ausgebildet ist, welches mit einem entsprechenden Gegenelement am Anschlussstutzen 5 zusammenwirkt.

Zwischen dem unteren Ende 8a des Schraubkeilelements 8 und dem Anschlagelement 14 ist am Außenumfang des Anschlussstutzens 5 eine Aussparung 13 für den Eingriff des Gegenelements 15 an der Spritzpistole 20 vorgesehen. Zur Befestigung des Fließbechers an der Spritzpistole 20 wird das Anschlussteil 3 zunächst in einer Stellung in die Aufnahmebohrung 18 im Spritzpistolenkörper 19 eingeführt, in welcher das Gegenelement 15 in die Aussparung 13 am Anschlussstutzen 5 eingreifen kann. In dieser Stellung kann der Führungsbereich 6 des Anschlussstutzens in die Aufnahmebohrung 18 im Spritzpistolenkörper 19 eingeschoben werden, bis die Oberseite des Anschlussstutzens 5 an einer in der Aufnahmebohrung 18 angeordneten Dichtfläche, welche bspw. durch eine Ringdichtung gebildet werden kann, anliegt. Anschließend kann durch eine Drehung des Anschlussteils 3 bzw. des daran angeformten Deckels 2 gegenüber dem Spritzpistolenkörper 19 das Schraubkeilelement 8 zur Herstellung der Schraubkeilverbindung in Eingriff mit dem Gegenelement 15 am Spritzpistolenkörper 19 gebracht werden.

Die Erstreckung des Schraubkeilelements 8 in Umfangsrichtung ist bevorzugt so ausgewählt, dass bereits bei einer viertel bis halben Umdrehung des Anschlussstutzens 5 die Wirkfläche 8' am Schraubkeilelement 8 mit einer entsprechenden Gegenfläche am Gegenelement 15 zur Anlage kommt, wodurch der Anschlussstutzen 5 kraftschlüssig am Pistolenkörper 19 festgeklemmt wird. Das Anschlagelement 14 verhindert dabei, dass das Anschlusssteil 3 gegenüber dem Spritzpistolenkörper 19 überdreht werden kann, denn es bildet beim Zudrehen der Schraubkeilverbindung einen drehbegrenzenden Anschlag, wenn das Gegenelement 15 an der Anschlagfläche 14' zur Anlage kommt. Aufgrund der Lücke 11 zwischen dem oberen Ende 8b des Schraubkeilelements 8 und der Anschlagfläche 14' des Anschlagelements 14 kann sich das Gegenelement 15 auch dann, wenn aufgrund von Fertigungstoleranzen die Steigung des Schraubkeilelements 8 oder die Lage (Verspannung) des Schraubkeilelements etwas größer als vorgesehen sein sollte, das harte Gegenelement 15 nicht in den weichen Kunststoff des Anschlussstutzens 5 bzw. des federelastischen Schraubkeilelements 8 eingraben bzw. einfräsen und Späne vom Anschlussstutzens 5 bzw. vom Schraubkeilelement 8 abtragen. Bevorzugt ist die Lücke 11 am Umfang des Anschlussstutzen 5 in Umfangsrichtung schmäler als die Erstreckung des Gegenelements 15 in Umfangsrichtung und besonders bevorzugt ist die Umfangserstreckung des Gegenelements 15 etwa vier- bis zehnmal so breit wie die Breite der Lücke 11.

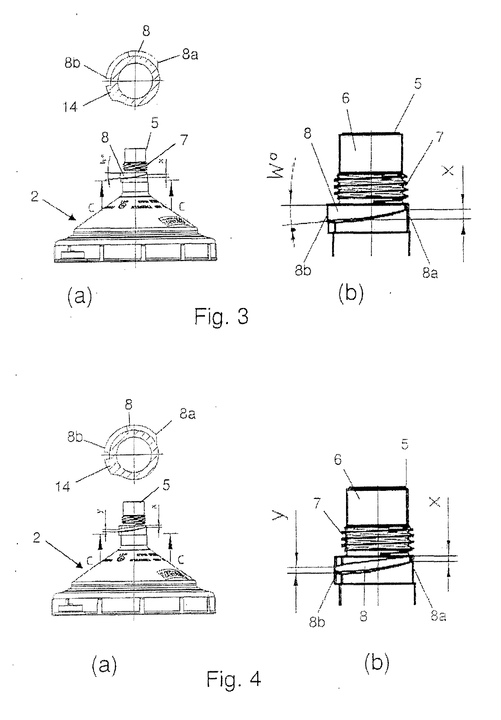

In Figur 4 ist ein Ausführungsbeispiel der Erfindung dargestellt, bei dem die Steigung des Schraubkeilelements 8 entlang des Umfangs des Anschlussstutzens 5 nicht linear ansteigend, sondern in Richtung des unteren Anfangs 8a des Schraubkeilelements 8 etwas steiler als im übrigen Bereich ausgebildet ist. Die Dicke des Schraubkeilelements 8, also dessen Erstreckung in axialer Richtung, ist dabei am unteren Anfang 8a und am oberen Ende 8b in etwa gleich groß, d. h. die Dicke y am oberen Ende 8b entspricht in etwa der Dicke x am unteren Anfang 8a (Figur 4b). Dadurch kann verhindert werden, dass beim Lösen der Schraubkeilverbindung Kunststoffspäne an der Wirkfläche 8' des Schraubkeilelements 8 abgeschält werden. Um auch beim Eindrehen des Schraubkeilelements 8 bei der Herstellung der Schraubkeilverbindung ein Einschneiden des Gegenelements 15 zu verhindern kann auch am oberen Ende 8b eine abgeflachte Steigung und/oder ein kleinerer Querschnitt als im mittleren Bereich vorgesehen sein.

Der gleiche Effekt kann auch durch einen kleineren Querschnitt des Schraubkeilelements 8 am unteren Anfang 8a in Axialrichtung erzielt werden. Dieses Ausführungsbeispiel der Erfindung ist in Figur 3 dargestellt, bei dem sich die Dicke des Schraubkeilelements 8 (also dessen Erstreckung in axialer Richtung) vom unteren Anfang 8a bis zum oberen Ende 8b kontinuierlich vergrößert. Am unteren Anfang 8a ist dabei die Steigung des Schraubkeilelements 8 größer als im mittleren Bereich.

Das Anschlussteil ist nicht auf die Verwendung an einem Deckel eines Fließbechers für eine Farbspritzpistole beschränkt. Es kann auch an anderen Materialzuführungseinrichtungen, wie zum Beispiel einem Materialzuführungsschlauch für eine Spritzpistole angeformt sein. Es kann auch als Adapter zur Verbindung eines Behälters auf eine Spritzpistole ausgebildet sein, um Behälter an der Spritzpistole befestigen zu können, welche über ein nicht zur Anschlussbohrung im Spritzpistolenkörper passendes Anschlussteil verfügen. Ferner kann das Anschlussteil auch am Boden eines Behälters für eine Spritzpistole angeformt sein.

## Patentansprüche

1. Farbspritzeinrichtung umfassend eine Farbspritzpistole (20) mit einem
Pistolenkörper (19) und einen Farbbehälter (1, 2), welche über ein Anschlussteil (3) miteinander verbindbar sind, wobei das Anschlussteil (3) umfasst
- einen hohlzylindrischen Anschlussstutzen (5), der aus Kunststoff gefertigt ist,
- ein am Außenumfang des Anschlussstutzen (5) umlaufendes Schraubkeilelement (8) mit einem unteren Anfang (8a) und einem oberen Ende (8b), welches zur Herstellung einer Schraubkeilverbindung mit einem am Pistolenkörper (19) der Spritzpistole (20) angeordneten Gegenelement (15) dient, wobei das Gegenelement (15) aus Metall gefertigt ist,
- und ein Anschlagelement (14), welches beim Herstellen der
Schraubkeilverbindung einen Endanschlag bildet,
**dadurch gekennzeichnet, dass** das Anschlagelement (14) in Umfangsrichtung im Abstand zum oberen Ende (8b) des Schraubkeilelements (8) angeordnet ist, wodurch zwischen dem Anschlagelement (14) und dem oberen Ende (8b) des Schraubkeilelements eine Lücke (11) gebildet wird.

2. Farbspritzeinrichtung nach Anspruch 1, **dadurch gekennzeichnet, dass** die Steigung des Schraubkeilelements (8) am unteren Anfang (8a) steiler verläuft als im übrigen Bereich.

3. Farbspritzeinrichtung nach Anspruch 1, **dadurch gekennzeichnet, dass** das Schraubkeilelement (8) am unteren Anfang (8a) und/oder am oberen Ende (8b) in Axialrichtung einen kleineren Querschnitt aufweist als in seinem mittleren Bereich.

4. Farbspritzeinrichtung nach einem der Ansprüche 1 bis 3, **dadurch**
**gekennzeichnet, dass** das Anschlussteil (3) aus Kunststoff ist.

5. Farbspritzeinrichtung nach einem der Ansprüche 1 bis 4, **dadurch**
**gekennzeichnet, dass** der hohlzylindrische Anschlussstutzen (5) einstückig an dem Farbbehälter (1, 2) angeformt ist.

6. Farbspritzeinrichtung nach einem der Ansprüche 1 bis 5, **dadurch**
**gekennzeichnet, dass** das Schraubkeilelement (8) als vom Anschlussstutzen (5) vorstehendes Keilprofil und das Anschlagelement (14) als vom Anschlussstutzen vorstehendes Widerlager mit einer Anschlagfläche (14') ausgeführt ist.

7. Farbspritzeinrichtung nach einem der Ansprüche 1 bis 6, **dadurch gekennzeichnet, dass** das Schraubkeilelement (8) in Form eines nur teilweise am Außenumfang des Anschlussstutzen (5) umlaufenden Außengewindegangs ausgebildet ist.

8. Farbspritzeinrichtung nach einem der Ansprüche 1 bis 7, **dadurch**
**gekennzeichnet, dass** der Anschlussstutzen (5) einen Führungsbereich (6) zur seitlichen Führung innerhalb einer Aufnahmebohrung (18) im Pistolenkörper (19) der Spritzpistole (20) enthält.

9. Farbspritzeinrichtung nach einem der Ansprüche 1 bis 8, **dadurch**
**gekennzeichnet, dass** das Schraubkeilelement (8) eine kontinuierlich ansteigende Wirkfläche (8') zur Anlage an einer entsprechenden Gegenfläche des Gegenelements (15) enthält.

10. Farbspritzeinrichtung nach einem der Ansprüche 1 bis 9, **dadurch gekennzeichnet, dass** das Schraubkeilelement (8) ein Dreiecks- oder Trapezprofil aufweist.

11. Farbspritzeinrichtung nach einem der Ansprüche 1 bis 10, **dadurch gekennzeichnet, dass** zwischen dem unteren Anfang (8a) und dem oberen Ende (8b) des Schraubkeilelements (8) eine Aussparung (13) vorgesehen ist für das Einsetzen des Ausschlussteiles in den Pistolenkörper (19).

12. Farbspritzeinrichtung nach einem der Ansprüche 1 bis 11, **dadurch gekennzeichnet, dass** das Schraubkeilelement (8) über weniger als die Hälfte des Umfangs des Anschlussstutzens (5) verläuft.

13. Farbspritzeinrichtung nach einem der Ansprüche 1 bis 12, **dadurch gekennzeichnet, dass** der Anschlussstutzen (5) an seiner Außenseite einen vorderen zylindrischen Führungsbereich (6) und ein daran anschließendes Außengewinde (7) aufweist.

14. Farbspritzeinrichtung nach einem der Ansprüche 1 bis 13, **dadurch gekennzeichnet, dass** der Farbbehälter einen Becher (1) und einen darauf aufsetzbaren Deckel (2) umfasst, wobei das Anschlussteil (3) einstückig am Deckel (2) angeformt ist.

15. Farbspritzeinrichtung nach Anspruch 14, **dadurch gekennzeichnet, dass** im Boden (22) des Farbbehälters ein Belüftungsventil (21) vorgesehen ist.

16. Farbspritzeinrichtung nach Anspruch 15, **dadurch gekennzeichnet, dass** am Deckel (2) Abdeckkappen (16, 17) zum Verschließen des hohlzylindrischen Anschlussstutzens (5) und/oder des Belüftungsventils (21) angeformt sind, welche über eine Sollbruchstelle vom Deckel (2) ablösbar sind.

17. Farbspritzeinrichtung nach Anspruch 14, **dadurch gekennzeichnet, dass** der Farbbehälter einen Liner umfasst.

18. Farbspritzeinrichtung nach Anspruch 14, **dadurch gekennzeichnet, dass** im Farbbehälter ein Sieb (23) zur Filterung der Spritzflüssigkeit vorgesehen ist.

19. Farbspritzeinrichtung nach Anspruch 14, **dadurch gekennzeichnet, dass** der Farbbehälter einen Linerdeckel umfasst. -

20. Farbspritzeinrichtung nach Anspruch 1, **dadurch gekennzeichnet, dass** das Gegenelement (15) der Farbspritzpistole (20) an einem einseitigen Ansatz oberhalb einer Aufnahmebohrung (18) des Pistolenkörpers (19) angeordnet ist.

21. Farbspritzeinrichtung nach Anspruch 1" **dadurch gekennzeichnet, dass** die Lücke (11) in Umfangsrichtung schmäler ist als die Erstreckung des Gegenelements (15) in Umfangsrichtung.

22. Farbspritzeinrichtung nach Anspruch 21, **dadurch gekennzeichnet, dass** die Erstreckung des Gegenelements (15) in Umfangsrichtung etwa 4 bis 10 mal breiter ist als die Breite der Lücke (11).

## Claims

1. Paint spraying device comprising a paint spray gun (20) with a gun body (19) and a paint reservoir (1, 2) which can be connected to one another by means of a connecting part (3), the connecting part (3) comprising:
- a hollow cylindrical connector (5) which is made of plastic,
- a screw wedge element (8) running around the external circumference of the connector (5) and having a lower start (8a) and an upper end (8b) which is used to produce a screw wedge connection with a mating element (15) arranged on the gun body (19) of the spray gun (20), the mating element (15) being made of metal,
- and a stop element (14) which forms an end stop when producing the screw wedge connection,
**characterised in that** the stop element (14) is arranged a distance from the upper end (8b) of the screw wedge element (8) in the circumferential direction, through which a gap (11) is formed between the stop element (14) and the upper end (8b) of the screw wedge element.

2. Paint spraying device according to claim 1, **characterised in that** the pitch of the screw wedge element (8) is steeper at the lower start (8a) than in the remaining region.

3. Paint spraying device according to claim 1, **characterised in that** the screw wedge element (8) exhibits a smaller cross-section at the lower start (8a) and/or at the upper end (8b) in the axial direction than in its central region.

4. Paint spraying device according to one of claims 1 to 3, **characterised in that** the connecting part (3) is made of plastic.

5. Paint spraying device according to one of claims 1 to 4, **characterised in that** the hollow cylindrical connector (5) is moulded to the paint reservoir (1, 2) in one piece.

6. Paint spraying device according to one of claims 1 to 5, **characterised in that** the screw wedge element (8) is embodied as a wedge profile projecting from the connector (5) and the stop element (14) is embodied as an abutment projecting from the connector with a stop face (14').

7. Paint spraying device according to one of claims 1 to 6, **characterised in that** the screw wedge element (8) is embodied in the form of an external thread which only runs partly around the external circumference of the connector (5).

8. Paint spraying device according to one of claims 1 to 7, **characterised in that** the connector (5) comprises a guide region (6) for lateral guidance inside a receiving bore (18) in the gun body (19) of the spray gun (20).

9. Paint spraying device according to one of claims 1 to 8, **characterised in that** the screw wedge element (8) comprises a continuously rising working face (8') designed to bear on a corresponding mating face of the mating element (15).

10. Paint spraying device according to one of claims 1 to 9, **characterised in that** the screw wedge element (8) exhibits a triangular or trapezoidal profile.

11. Paint spraying device according to one of claims 1 to 10, **characterised in that** an opening (13) is provided between the lower start (8a) and the upper end (8b) of the screw wedge element (8) for insertion of the connecting part in the gun body (19).

12. Paint spraying device according to one of claims 1 to 11, **characterised in that** the screw wedge element (8) extends over less than half of the circumference of the connector (5).

13. Paint spraying device according to one of claims 1 to 12, **characterised in that** on its outside the connector (5) exhibits a front cylindrical guide region (6) and an external thread (7) adjoining it.

14. Paint spraying device according to one of claims 1 to 13, **characterised in that** the paint reservoir comprises a cup (1) and a lid (2) which can be fitted on it, the connecting part (3) being moulded to the lid (2) in one piece.

15. Paint spraying device according to claim 14, **characterised in that** a venting valve (21) is provided in the bottom (22) of the paint reservoir.

16. Paint spraying device according to claim 15, **characterised in that** caps (16, 17) for closing the hollow cylindrical connector (5) and/or the venting valve (21) are moulded to the lid (2), these being detachable from the lid (2) by means of a predetermined break point.

17. Paint spraying device according to claim 14, **characterised in that** the paint reservoir comprises a liner.

18. Paint spraying device according to claim 14, **characterised in that** a sieve (23) is provided in the paint reservoir to filter the spraying liquid.

19. Paint spraying device according to claim 14, **characterised in that** the paint reservoir comprises a liner lid.

20. Paint spraying device according to claim 1, **characterised in that** the mating element (15) of the paint spray gun (20) is arranged on a single-sided projection above a receiving bore (18) of the gun body (19).

21. Paint spraying device according to claim 1, **characterised in that** the gap (11) is narrower in the circumferential direction than the extension of the mating element (15) in the circumferential direction.

22. Paint spraying device according to claim 21, **characterised in that** the extension of the mating element (15) in the circumferential direction is roughly 4 to 10 times wider than the width of the gap (11).

## Revendications

1. Dispositif de pulvérisation de peinture comprenant un pistolet de pulvérisation de peinture (20) avec un corps de pistolet (19) et un récipient de peinture (1, 2) qui peuvent être reliés ensemble par un élément de raccordement (3), l'élément de raccordement (3) comportant :
- une tubulure de raccordement (5) cylindrique et creuse qui est fabriquée en plastique,
- un élément de cale hélicoïdale (8) tournant sur la périphérie extérieure de la tubulure de raccordement (5) avec un commencement inférieur (8a) et une extrémité (8b) supérieure qui sert à l'établissement d'une liaison de cale hélicoïdale avec un élément antagoniste (15) disposé sur le corps (19) du pistolet de pulvérisation (20), l'élément antagoniste (15) étant fabriqué en métal,
- et un élément antagoniste (14) qui forme une butée finale lors de l'établissement de la liaison de cale hélicoïdale,
**caractérisé en ce que** l'élément de butée (14) est disposé dans le sens périphérique à distance de l'extrémité supérieure (8b) de l'élément de cale hélicoïdale (8), ce qui forme un vide (11) entre l'élément de butée (14) et l'extrémité supérieure (8b) de l'élément de cale hélicoïdale.

2. Dispositif de pulvérisation de peinture selon la revendication 1, **caractérisé en ce que** la pente de l'élément de cale hélicoïdale (8) sur le commencement inférieur (8a) s'étend de manière plus raide que dans la zone restante.

3. Dispositif de pulvérisation de peinture selon la revendication 1, **caractérisé en ce que** l'élément de cale hélicoïdale (8) présente, sur le commencement inférieur (8a) et/ou sur l'extrémité supérieure (8b) dans le sens axial, une section transversale plus petite que dans sa zone médiane.

4. Dispositif de pulvérisation de peinture selon l'une quelconque des revendications 1 à 3, **caractérisé en ce que** l'élément de raccordement (3) est en plastique.

5. Dispositif de pulvérisation de peinture selon l'une quelconque des revendications 1 à 4, **caractérisé en ce que** la tubulure de raccordement (5) cylindrique et creuse est formée d'un seul tenant sur le récipient de peinture (1, 2).

6. Dispositif de pulvérisation de peinture selon l'une quelconque des revendications 1 à 5, **caractérisé en ce que** l'élément de cale hélicoïdale (8) est réalisé comme un profil de cale dépassant de la tubulure de raccordement (5) et l'élément de butée (14) est réalisé comme un contre-palier dépassant de la tubulure de raccordement avec une surface de butée (14').

7. Dispositif de pulvérisation de peinture selon l'une quelconque des revendications 1 à 6, **caractérisé en ce que** l'élément de cale hélicoïdale (8) est réalisé sous la forme d'un filetage extérieur tournant seulement partiellement sur la périphérie extérieure de la tubulure de raccordement (5).

8. Dispositif de pulvérisation de peinture selon l'une quelconque des revendications 1 à 7, **caractérisé en ce que** la tubulure de raccordement (5) contient une zone de guidage (6) pour le guidage latéral dans un perçage de réception (18) dans le corps (19) du pistolet de pulvérisation (20).

9. Dispositif de pulvérisation de peinture selon l'une quelconque des revendications 1 à 8, **caractérisé en ce que** l'élément de cale hélicoïdale (8) contient une surface active (8') montant en continu pour l'appui contre une surface antagoniste correspondante de l'élément antagoniste (15).

10. Dispositif de pulvérisation de peinture selon l'une quelconque des revendications 1 à 9, **caractérisé en ce que** l'élément de cale hélicoïdale (8) présente un profil triangulaire ou trapézoïdal.

11. Dispositif de pulvérisation de peinture selon l'une quelconque des revendications 1 à 10, **caractérisé en ce qu'**un évidement (13) est prévu entre le commencement (8a) inférieur et l'extrémité supérieure (8b) de l'élément de cale hélicoïdale (8) pour l'insertion de l'élément de raccordement dans le corps de pistolet (19).

12. Dispositif de pulvérisation de peinture selon l'une quelconque des revendications 1 à 11, **caractérisé en ce que** l'élément de cale hélicoïdale (8) s'étend sur moins de la moitié de la périphérie de la tubulure de raccordement (5).

13. Dispositif de pulvérisation de peinture selon l'une quelconque des revendications 1 à 12, **caractérisé en ce que** la tubulure de raccordement (5) présente, sur son côté extérieur, une zone de guidage cylindrique avant (6) et un filet extérieur (7) s'y raccordant.

14. Dispositif de pulvérisation de peinture selon l'une quelconque des revendications 1 à 13, **caractérisé en ce que** le récipient de peinture comporte une coupe (1) et un couvercle (2) pouvant être placé dessus, l'élément de raccordement (3) étant formé d'un seul tenant sur -le couvercle (2).

15. Dispositif de pulvérisation de peinture selon la revendication 14, **caractérisé en ce qu'**une soupape de ventilation (21) est prévue dans le fond (22) du récipient de peinture.

16. Dispositif de pulvérisation de peinture selon la revendication 15, **caractérisé en ce que** des capuchons (16, 17) sont formés sur le couvercle (2) pour la fermeture de la tubulure de raccordement (5) cylindrique et creuse et/ou de la soupape de ventilation (21), lesquels peuvent être détachés par un point destiné à la rupture du couvercle (2).

17. Dispositif de pulvérisation de peinture selon la revendication 14, **caractérisé en ce que** le récipient de peinture comporte un liner.

18. Dispositif de pulvérisation de peinture selon la revendication 14, **caractérisé en ce qu'**un tamis (23) pour le filtrage du liquide de pulvérisation est prévu dans le récipient de peinture.

19. Dispositif de pulvérisation de peinture selon la revendication 14, **caractérisé en ce que** le récipient de peinture comporte un couvercle de liner.

20. Dispositif de pulvérisation de peinture selon la revendication 1, **caractérisé en ce que** l'élément antagoniste (15) du pistolet de pulvérisation de peinture (20) est disposé sur une saillie unilatérale au-dessus d'un perçage de réception (18) du corps de pistolet (19).

21. Dispositif de pulvérisation de peinture selon la revendication 1, **caractérisé en ce que** le vide (11) dans le sens périphérique est plus étroit que l'étendue de l'élément antagoniste (15) dans le sens périphérique.

22. Dispositif de pulvérisation de peinture selon la revendication 21, **caractérisé en ce que** l'étendue de l'élément antagoniste (15) dans le sens périphérique est à peu près 4 à 10 fois plus large que la largeur du vide (11).
